# EUROPÄISCHE PATENTANMELDUNG

(11) **EP 4 235 868 A1**
(43) Veröffentlichungstag der Anmeldung: **30.08.2023**
(21) Anmeldenummer: 22158321.4
(22) Anmeldetag: 23.02.2022
(51) Int. Cl.: H01M 4/38, H01M 12/06, H01M 4/02

(54) **SILIZIUM ENTHALTENDES ANODENMATERIAL UND SILIZIUM ENTHALTENDER ELEKTRONEN LIEFERNDER KRAFTSTOFF**

(71) Anmelder: Evonik Operations GmbH, 45128 Essen (DE)
(72) Erfinder: Die Erfindernennung liegt noch nicht vor
(74) Vertreter: Evonik Patent Association

(57) **Zusammenfassung**

Gegenstand der Erfindung ist ein Silizium enthaltendes Anodenmaterial, das erhältlich ist aus den Rückständen bzw. Sägerückständen der Silizium Wafer Herstellung und als Anodenmaterial und vorzugsweise als nachfüllbarer Elektronen liefernder Kraftstoff in einer Anode einer Primärzelle zugeführt werden kann.

## Beschreibung

Gegenstand der Erfindung ist ein Silizium enthaltendes Anodenmaterial, das erhältlich ist aus den Rückständen bzw. Sägerückständen der Silizium Wafer Herstellung und als Anodenmaterial und vorzugsweise als nachfüllbarer Elektronen liefernder Kraftstoff, nachfolgend auch electronfuel oder Sifuel, genannt, einer Anode einer Primärzelle zugeführt werden kann.

Eines der großen politischen Ziele auf europäischer und deutscher Ebene ist die Dekarbonisierung des Verkehrs. Der Einsatz von fossilen, überwiegend flüssigen Kraftstoffen wie Diesel und Benzin soll hierbei durch emissionsärmere Kraftstoffe ersetzt werden, da bei klassischen Kraftstoffen der Energieinhalt des Kraftstoffes durch Verbrennung in Verbrennungskraft-maschinen freigesetzt wird und wobei Kohlendioxid gebildet wird.

Aktuell wird ein immer stärkerer Fokus auf sogenannte erneuerbare, nicht-biogene Kraftstoffe gesetzt, die Strom (bevorzugt aus erneuerbaren Energien) nutzen. Hierbei wird ein hoher Wirkungsgrad innerhalb der Umwandlungskette angestrebt. Zudem soll die Verminderung der Emissionen gegenüber fossilen Kraftstoffen maximal sein. Des Weiteren sollen wirtschaftliche, globale und in der Umwelt vorhersehbare negative Sekundäreffekte, wie die Forcierung von Monokulturen, Landverbrauch, Überdüngung usw., wie beispielsweise durch die Einführung von Biodiesel geschehen, vermieden werden. Ferner soll die Energiedichte und Speicherfähigkeit eines neuen Kraftstoffes hoch sein. Um eine Umstellung zu erleichtern muss die lokale Verfügbarkeit gewähreistet werden und eine Nutzung bestehender Infrastrukturen, wie z.B. Tankstellen, um Kosten zu vermeiden, möglich sein.

Nach heutigen Verfahren zur Herstellung von Silizium-Wafern werden ungefähr 30% des hochreinen Silizium Ausgangsmaterials als Sägerückstand in eine fein-partikuläre Slurry überführt. Dies liegt vor Allem darin begründet, dass das Verhältnis zwischen der Dicke des Wafers und der Dicke der eingesetzten Bandsäge ungefähr 2 : 1 beträgt, so dass also ein Drittel des Siliziumblocks in sehr feinkörnige Silizium-Sägepartikel überführt werden. Diese Partikel werden aus dem Prozess mit einem Kühlmittel entfernt, das zumeist aus kurzkettigen Polyehtylenglykolen besteht. Daneben wird dem Kühlmittel feinkörniges Siliziumcarbid zur Verbesserung des Sägeprozesses beigemischt. Wenn das Kühlmittel die maximale Beladung mit Silizium-Sägerückständen erreicht hat, wird der Feststoff abgetrennt. Das Kühlmittel kann dann erneut eingesetzt werden. Dies wird durch verschiedene Aufreinigungsprozesse wie beispielsweise Vakuumverdampfen oder hydromechanische Separierung erzielt. Die dabei gewonnene Fraktion der feinkörnigen Feststoffe, und insbesondere der Siliziumpartikel, könnte aus verschiedenen Gründen bislang nicht wiederverwendet werden oder musste aufwendig über metallurgische Verfahren oder Schmelzverfahren aufgereinigt werden. Eines der Hauptprobleme stellt die Mischung aus Silizium- und Siliziumcarbid-Partikeln dar. Zur Rückgewinnung des Siliziums und damit zur Trennung der so angefallenen Partikelmischung hat es in der Vergangenheit verschiedene Versuche und Untersuchungen gegeben, die jedoch bisher erfolglos geblieben sind.

Überraschend wurde gefunden, dass sich die Partikelmischung als Anodenmaterial für eine SiliziumBatterie eignet.

Aufgabe der Erfindung war, es ein Material bereitzustellen, das eine hohe Energiedichte aufweist und vorzugsweise verfügbar ist oder mit geringem Aufwand als Nebenprodukt anderer Prozesse nutzbar gemacht werden kann. Des Weiteren bestand die Aufgabe, ein Material bereitzustellen, welches die zuvor genannten Anforderungen erfüllt und sich umweltfreundlich und wirtschaftlich bereitstellen lässt.

Gelöst werden die Aufgaben der Erfindung durch ein Anodenmaterial nach Anspruch 1, eine Anode nach Anspruch 11, einen Elektronen liefernden Kraftstoff (e-fuel) nach Anspruch 12 sowie die Verwendung nach Anspruch 15.

Kern der Erfindung ist die Verwendung von Silizium enthaltenden Sägerückständen (Pulver) oder auch mit einer fluiden Matrix benetztes Silizium enthaltendes, pulverförmiges Material als aktives Material für Si-Batterie-Zellen. Das erfindungsgemäße Silizium enthaltende Anodenmaterial umfassend Siliziumpartikel, Kohlenstoff und Silizium enthaltende Partikel und optional Diamant Partikel kann als Elektronen liefernder Kraftstoff (electronfuel bzw. Sifuel) also als Verbrauchsmaterial mit Energieinhalt, der durch Auflösung des Elektronen liefernden Kraftstoffes (Sifuel) freigesetzt wird.

Überraschend wurde gefunden, dass sich die Aufgabenstellung durch die Aufbereitung von Rückständen aus der mechanischen Bearbeitung von Siliziumprodukten für die Nutzung als Silizium enthaltendes Anodenmaterial lösen lässt, wobei die Rückstände aus dem beispielhaften Sägen der Wafer wenigstens Silizium, Kohlenstoff und Silizium enthaltende Partikel, wie zum Beispiel Siliziumcarbid und/oder eine allotrope Kohlenstoffmodifikation, wie Diamant, und metallische Bestandteile aufweisen. Die erfindungsgemäßen Silizium enthaltenden Anodenmaterialien umfassen vorzugsweise partikuläre Feststoffe und optional eine fluide Matrix. Die Kombination aus partikulären Feststoffen und fluider Matrix im Anodenmaterial kann auch als Komposit-Anode (Si-SiC-PEG) bezeichnet werden und kann in einem Energiewandler unter Freisetzung elektrischer Energie zu Siliziumdioxid (SiO₂) umgewandelt werden. Bei diesem Prozess wird Energie freigesetzt, die in Form von elektrischer Energie abgegeben wird und für alle Anwendungsfelder einer Primärbatterie geeignet ist. Als Anwendungsfelder kommt in Betracht der Antrieb von Fahrzeugen aller Art, insbesondere PKW, LKW, Busse, deren Antrieb mittels eines Elektromotors erfolgt. Der spezifische Energiegehalt des Halbmetalls Silizium als Batteriebrennstoff beträgt rund 9 kWh/kg. Ein Vorteil von Silizium ist, das es weltweit in großen Mengen hergestellt wird und leicht verfügbar ist. Es kann nach dem Stand der Technik bis hin zu höchsten Reinheiten gewonnen werden. Die Darstellung erfolgt über die carbothermische Reduktion von Quarzkies mit Koks/Holzschnitzel im Elektroschachtofen. Alternativ kann eine Herstellung von Silizium über die Herstellung von SiCl₄ oder SiF₄ und anschließender Umsetzung zu Silizium oder einer Reduktion von SiO₂ erfolgen.

Hierbei wird überwiegend elektrische Energie für die Reduktion eingesetzt, die insbesondere aus erneuerbaren Quellen (z.B. Wind, Sonne, Wasser, Geothermie oder Biomasse) bereitgestellt wird - z.B. in Norwegen. Bei einer Nutzung von Silizium als Energiequelle für elektrische Antriebe können die Umweltauswirkungen gegenüber einem fossilen Kraftstoff deutlich reduziert werden, so setzt ein Diesel PKW durch Zurücklegen einer Strecke von 50 km 10,2 kg CO₂ frei, während der Betrieb mit einer Siliziumbatterie lediglich 3,6 kg CO₂ freisetzt. Auch ein mit einer Lithium-Batterie angetriebener PWK käme für die gleiche Strecke auf 7,2 kg CO₂. Zudem sinkt dadurch die Gefahr hoher Flächeninanspruchnahmen, Monokulturen sowie Überdüngung.

Für die Herstellung von Halbleiterbauelementen und Solarzellen wird heute in großem Volumen (über 200000 t/Jahr) Silizium als Basismaterial verwendet. Das Silizium wird zunächst aus Quarz gewonnen und in einem carbothermischen Reduktions-Schmelzverfahren, wie Elektroniederschachtofen, zu sogenanntem metallurgischen Silizium (mg-Si) weiterverarbeitet. Die dabei aus der Schmelze gewonnenen Siliziumblöcke werden granuliert und dienen als Ausgangsmaterial für den nächsten Schritt, die Herstellung von Polysilizium. Über verschiedene Prozessschritte werden Siliziumstäbe hergestellt, die unterschiedlich weiterbearbeitet werden, je nachdem, ob die Siliziumstäbe polykristallin oder einkristallin vorliegen. Die Herstellung von Silizium hoher Reinheit erfolgt in der Regel über die Herstellung und Zersetzung von Chlorsilanen. Diese werden danach i.d.R. in Scheiben weiterverarbeitet.

Ein wichtiger Schlüsselprozess bei der Herstellung der Siliziumscheiben für die Halbleiterindustrie und für die Photovoltaik-Industrie ist das Drahtsägen, in dem Bricks als Ausgangsmaterial genutzt werden. Beim Drahtsägeverfahren wird dabei zum überwiegenden Teil mit Metalldrähten und einer Siliziumcarbid-Suspension (Slurry), typischerweise basierend auf Siliziumcarbid (eg. SiC F600) und Polyethylenglykol (PEG200), gesägt.

Aus Solarsilizium werden Silizium-Ingots produziert, aus denen nachfolgend dünne Siliziumscheiben, die sogenannten Wafer, gesägt werden. Die Herstellung der Wafer mit Dicken von ca. 200 µm erfolgt mit einem speziellen Drahtsägeverfahren (MWS: multi-wire slurry sawing). Während dieses Fertigungsschrittes gehen ca. 45 % des hochreinen Siliziums als feinste Sägespäne (Partikelgröße < 5 µm) in der Sägesuspension verloren.

Die Erfindung bezieht sich auf die hohen Materialverluste an Silizium, die beispielhaft bei der Herstellung dieser Siliziumscheiben entstehen. Eine Wiederverwendung ist wirtschaftlich äußerst interessant, da jährlich sehr große Mengen (über 70000 t/Jahr) an hochwertigem Silizium-Material in diesem Verfahrensschritt verlorengehen. Insbesondere beim Herstellen von Siliziumscheiben in der Photovoltaik treten diese hohen Verluste auf. Wertvolles Siliziumpulver findet sich in hohem Maße in der gebrauchten Sägesuspension wieder. Diese Suspensionen enthalten zudem Polyethylenglykol (PEG) als Kühlschmierstoff, Siliziumcarbid (SiC) als Schneidhilfsstoff und geringe Mengen erodiertes Eisen und weitere metallische Verunreinigungen aus dem Sägedraht. Ferner werden künftig auch vermehrt Photovoltaikzellen nach ihrer Nutzung einem Recycling zugeführt werden.

Bekannt ist die Abtrennung des PEGs und der groben SiC-Partikel (> 5 µm) aus den Sägesuspensionen. Damit verbleibt gegen Ende des Recyclingprozesses ein Material (Koppelprodukt), in dem das gesamte hochreine Silizium, Reste an PEG, SiC und alle weiteren metallischen Verunreinigungen enthalten sind. Das Siliziumcarbid (SiC) und der Polyethylenglykol (PEG) in der Sägesuspension werden aufbereitet. Nach erfolgter Qualitätskontrolle werden das aufbereitete SiC und PEG mit geringen Mengen frischem SiC und PEG versetzt und wieder in den Wafer Sägeprozess zurückgeführt. Dabei liegen die Rückgewinnungsraten für das SiC bei ca. 85 % und für das PEG bei ca. 90 %. Während des Sägeprozesses werden ca. 45 Gew.-% der Silizium-Ingots zerspant. Der dabei anfallende feinstpartikuläre Siliziumstaub wird bei der Suspensionsaufbereitung mit Resten an SiC und PEG aus dem Kreislauf als sogenanntes Koppelprodukt (Material) ausgeschleust. Zudem gelangen Eisen und Spuren von Kupfer und Messing als Abrieb des messingbeschichteten Sägedrahts in die Suspension und somit in das Verfahren zur Aufarbeitung des nach Abtrennung von Anteilen an SiC und PEG verbleibenden Materials (Koppelprodukt). Da diese Aufbereitung bislang praktisch nicht umsetzbar war und zudem nicht wirtschaftlich erscheint, wurde es in der Praxis nicht umgesetzt.

Über diese relevante Quelle hinaus fallen generell die "Rückstände aus der mechanischen Silizium-Bearbeitungen" unter die Erfindung. Ihnen ist gemeinsam, dass sie Silizium, Kohlenstoff enthaltende Partikel, wie zum Beispiel Siliziumcarbid und/oder Diamant, und weitere metallische Bestandteile aufweisen. Anders als bei der Herstellung von Silizium, bereiten diese wie auch Sauerstoff insbesondere gebunden als SiOₓ wobei X kleiner 2 ist, bei der erfindungsgemäßen Anwendung als Anodenmaterial keine Probleme.

Die Erfindung umfasst Verfahren, Systeme und Vorrichtungen zum Erzeugen und/oder Gewinnen eines oder mehrerer siliziumhaltiger Produkte aus verbrauchten Siliziumsägesuspensionen (Slurries) oder dem Siliziumrecycling von Photovoltaiksystemen.

Offenbart sind Verfahren und Vorrichtungen zur Herstellung von polykristallinem Siliziumgranulat und zur Gewinnung von Siliziumcarbidpartikeln aus verschiedenen Quellen. Die verschiedenen Quellen können Slurries sein, wie sie beispielsweise bei Drahtsägeprozessen in der Mikroelektronik-(ME) und Photovoltaik-(PV)-Industrie erzeugt werden. Aufgrund der Verarbeitung von hochreinem Silizium in der Halbleiterfertigung weisen vorliegende Slurry (Silizium-Siliziumcarbid-PEG200-Suspension) hohe Reinheit auf.

Die verbrauchten Slurries besteht im Allgemeinen aus sehr feinen festen Partikeln innerhalb einer flüssigen Phase. Die festen Partikel sind unregelmäßig geformt und bestehen aus Siliciumcarbid anfangs mit einem effektiven Durchmesser zwischen 15 und 20 Mikrometern. Die restlichen Partikel stammen von der Stahldrahtsäge und dem Siliziumwafer. Die Stahlpartikel können mit den Siliziumcarbidpartikeln assoziiert sein und haben im allgemeinen einen effektiven Durchmesser von weniger als 2 bis 4 Mikrometern. Die Siliziumpartikel sind im Allgemeinen frei von Siliciumcarbid und im Partikelgrößenbereich von 1 bis 5 Mikrometern. Während des Drahtsägevorgangs wird das Siliciumcarbid-Ausgangsmaterial leicht abgerieben, und kleinere Partikel im Bereich von 5 bis 10 Mikrometern werden im Laufe der Zeit gebildet.

Einige Ausführungsformen der Erfindung stellen Vorrichtungen und -verfahren bereit, mittels derer Anodenmaterial für die Verwendung in Siliziumbatterien gewonnen werden können:
(1) Abtrennen von Drahtsägenstahlpartikeln aus den Slurries unter Verwendung einer oder mehrerer Reihen physikalischer Trennvorrichtungen (zum Beispiel Magnete oder Elektromagnete).
(2) Gewinnung des Aufschlämmungsprodukts und anschließende Entfernung der flüssigen Phase (entweder Glykol-Wasser oder Öl), um eine feuchte feine Pulvermischung aus Siliciumcarbid und Silicium herzustellen;
(3) vollständige Entfernung der verbleibenden Feuchtigkeit oder des verbleibenden Öls unter Verwendung einer Flüssig-Gas-Phasentrennung der Pulvermischung, die eine trockene Mischung aus Silizium und Siliziumkarbid bilden kann;
(4) Unterziehen eines trockenen Gemisches aus Silicium und Siliciumcarbid einem Hochtemperaturreaktor um ein Granulat, Tablette zu erzeugen, das als Anodenmaterial für eine Silizium-Primärbatterie verwendet wird.

Diese Verfahren und Vorrichtungen können mit jedem anderen hier beschriebenen Vorrichtungen oder Verfahren zur Rückgewinnung und Herstellung von Silizium, Siliziumkarbid und PEG aus einem Wafersägeverfahren kombiniert, umgeschaltet oder modifiziert werden. Die Verfahrensschritte zur Rückgewinnung von Silizium, Siliziumkarbid und PEG können in beliebiger Reihenfolge implementiert werden.

Andere Ausführungsformen stellen Vorrichtungen zur Aufreinigung und -verfahren bereit, die verwendet werden können, um Silizium als Anodenmaterial zu gewinnen:
(1) Trennung großer Siliziumkarbidteilchen (z. B. Teilchen mit mehr als 5 Mikrometern Durchmesser) mittels Schwerkrafttrennverfahren mit oder ohne Hilfe von Zentrifugalkräften unterschiedlicher Größe (z. B. Absetzbehälter, Klärer, Hydrozyklon, Zentrifuge, Filter und hydraulischer Klassifikator, die einen zusätzlichen konvektiven Fluss verwenden, um die Trennung zu bewirken)
(2) Entfernen von Drahtsägenstahlpartikeln aus der Aufschlämmung unter Verwendung einer oder mehrerer Serien von magnetischen Trennvorrichtungen (z. B. Magneten oder Elektromagneten);
(3) Durchführen einer Auslaugung, z. B. durch Umsetzen des an Stahl abgereicherten Glanzes mit einer sauren Lösung, um den Stahlgehalt weiter zu verringern;
(4) Entfernen einer flüssigen Phase (z. B. PEG), um eine feuchte feine Pulvermischung (z. B. weniger als 5 Prozent Flüssigkeit) aus angereichertem Silizium mit nur geringen Mengen Stahl und kleinerer Größe zu gewinnen (z. B. Silicium- und Siliziumcarbidpartikel mit weniger als 5 Mikrometer effektiven Durchmesser);
(5) Trocknen der verbleibenden Feststoffe, um eine praktisch vollständige Entfernung der Flüssigkeit zu bewirken.

Abtrennung von Polyethylenglykol und Silizium- und Siliziumcarbidpartikeln aus Silizium-Sägeprozessen. Vorrichtung und Verfahren umfasst zuerst das Verdünnen der Slurries (Suspensionen) mit Wasser und Rühren in einem Rührbehälter oder Zyklon und vorbeiführen an einem Hartmagneten oder Elektromagneten um Eisenhaltige Partikel aus der Suspension (Slurry) nach der Ultraschallbehandlung bzw. -verarbeitung; B) Zugabe eines Flockungsmittels zu der Mischung zur Zentrifugaltrennung;
Abtrennung von Polyethylenglykol und Silizium- und Siliziumkarbidpartikeln aus Silizium-Sägeprozessen. Vorrichtung und Verfahren umfasst zuerst das Verdünnen der Slurries (Suspensionen) mit Wasser und Rühren in einem Rührbehälter oder Zyklon und vorbeiführen an einem Hartmagneten oder Elektromagneten um Eisenhaltige Partikel aus der Suspension (Slurry) nach der Ultraschallbehandlung bzw. -verarbeitung; B) Zugabe eines Flockungsmittels zu der Mischung zur Zentrifugaltrennung

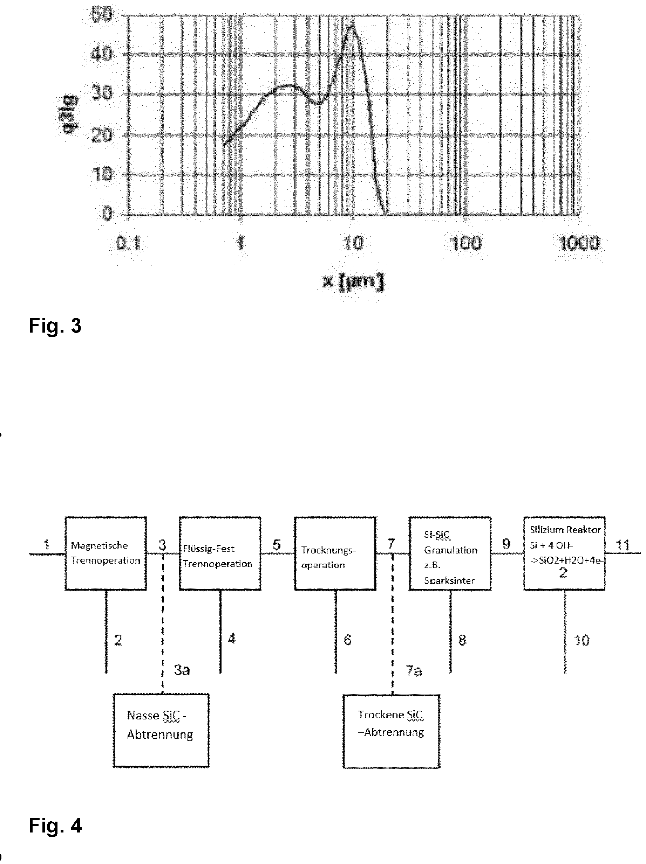

FIG. 4 zeigt Verfahren und Vorrichtungen umfassend einen oder mehrere Trennschritte (zwischen den Strömen 1 und 7), die konfiguriert sind, um ein siliziumhaltiges Eingangsmaterial (Strom 1) zu einem siliziumreichen Strom (Strom 7) zu verarbeiten. Trennschritte können folgenden Trennungsoperationen umfassen: magnetisch, fest/flüssig, fest/gasförmig, gas/flüssig, Dichte, Sedimentationsgeschwindigkeit, Trocknung oder Auslaugung. Wie in FIG. 4 dargestellt können diese Trennschritte verwendet werden, um Metalle, Siliciumcarbide, Flüssigkeiten, beispielsweise PEG, Wasser oder Öl, aus dem siliziumhaltigen Eingangsmaterial in verschiedenen Ausgangsströmen, z. B. den Strömen 2, 4 und 6, zu separieren oder zu entfernen und Fraktionen davon wiederzugewinnen. Diese Ströme können metallreiche Ströme (Strom 2 in Fig. 4) und siliziumkarbidreiche Ströme (Strom 3a und 7a) sein.

Der siliziumreiche Strom 7 kann granuliert, gesintert oder einem Hochtemperaturprozess geformt bzw. umgesetzt werden, um ein Siliziumgranulat zu erzeugen. Das siliziumreiche Granulat (Strom 9) kann dann als Anodenmaterial in einer Silizium-Primär-Zelle (Siliziumreaktor 2 in Fig. 4) verwendet zu werden.

Slurries aus einem Silizumschneideprozess wird kontinuierlich in eine erste Einheit eingespeist wird, wobei aus dem Slurry die Stahlpartikel mittels eines physikalischen Abscheiders im wesentlichen entfernt werden. In einer Ausführungsform ist der physikalische Separator ein magnetischer Separator. Der physikalische Abscheider kann ein beliebiges System sein, das den Unterschied der physikalischen Eigenschaften zwischen eisenhaltigen Materialien (z. B. Eisenlegierung) und den anderen Suspensionskomponenten ausnutzt. Die eisenhaltigen Partikel bzw. Fraktion (Strom 2) können in ggf. weiter verarbeitet werden. Eine eisenfreie Fraktion (Strom 3) ist demnach einer Prozessierung durch einen physikalischen Abscheider zum Entfernen von eisenhaltigen Partikeln unterworfen gewesen. Unter eisenfreie Slurries/Suspensionen werden also Suspensionen verstanden, die vollständig, im Wesentlichen, größtenteils oder etwas frei von eisenhaltigen Partikeln ist. Die eisenfreie Suspension kann nun mindestens einem Flüssig-Fest-Trennschritt(en) unterzogen werden, bei denen die flüssige Phase (entweder Glykol-Wasser oder Öl) Strom 4 ggf. zur Wiederverwendung im Wafer-Schneidprozess zur Verfügung gestellt wird. Der Strom 5 ist das Partikelgemisch im Wesentlichen besteht aus Silizium- und Siliziumkarbidpartikel. Erfolge vorher eine Trennoperation 3a in der die großen SiC-Partikel abgetrennt wurden, da Umfasst Strom 5 im wesentlichen Partikel mit einem Durchmesser zwischen 0,5 und 10 Mikrometer. Strom 5 stellt ein aus dem hier beschriebenen Verfahren feuchtes Pulverprodukt dar, das in einem Trocknungsschritt getrocknet werden kann, um die restliche verbleibende Flüssigkeit (zum Beispiel Glykol, Wasser oder Öl) zu entfernen. Unter einem solchen Trocknungsschritt wird im Allgemeinen eine mäßige Erwärmung des Materials und/oder eine Druckreduzierung verstanden, um die gewünschte Entfernung der anhaftenden Flüssigkeit zu bewirken. In der alternativen Ausführungsform ohne Strom 3a bzw. 7a umfasst dann ein trockenes Pulverprodukt im Wesentlichen bestehend aus Silicium- und Siliciumcarbidteilchen mit Größen im Bereich von etwa 0,5 bis 20 Mikrometern.

In einer anderen Ausführungsform der Erfindung werden die Siliciumcarbidpartikel der Suspension (Strom 3) in zwei Fraktionen getrennt, von denen eine größtenteils größere Partikel enthält (zum Beispiel etwa 10 bis 20 Mikrometer Partikel) und die andere die restliche Fraktion der Siliciumcarbidpartikel (zum Beispiel etwa 0,5-10 Mikrometer). Beispielsweise kann ein solcher Trennschritt unter Verwendung eines Hydrozyklons (3a) oder in einem Luftzyklon (7a) geeigneter Geometrie nach dem Trocknungsschritt durchgeführt werden. Jeder Zyklontyp ist in der Lage, die meisten der großen Siliciumcarbidpartikel effektiv abzutrennen. Ein Vorteil der Entfernung der großen Siliciumcarbidpartikel vor der Granulation bzw. Hochtemperaturrgranulation besteht darin, dass der Siliziumgehalt dadurch erhöht wird.

Slurries aus einem Silizumschneideprozess werden in einen Rührkessel gegeben, in dem eine flüssige Lösung, die Wasser enthält, zugegeben wird, um eine geeignete Viskosität für die nachfolgende Verarbeitung zu erzeugen. Mechanische Energie kann durch Rühren und/oder Vibration zugeführt werden, um die Partikel im Rührkessel angemessen zu dispergieren. Die dispergierte Suspension wird dann zu einem Magnetabscheider mit hohem Gradienten oder einer ähnlichen Vorrichtung transportiert, die wesentliche Unterschiede in den physikalischen Eigenschaften der Eisenteilchen ausnutzt, wobei die eisenhaltigen Teilchen effektiv entfernt und zu einem Abfallrecyclingstrom 2 geleitet werden. Die eisenfreie Suspension (Strom 3) wird dann in einen Flüssig / Fest-Abscheider gepumpt. Diese Einheit kann aus einer Filterpresse, einer Zentrifuge, einem Hydrozyklon oder einer anderen Fest-Flüssig-Trennvorrichtung bestehen, die mit einer Partikelgröße zwischen 1 und 20 Mikrometern arbeiten kann.

In der beispielhaften Ausführungsform nach FIG. 4 wird der Flüssigkeitsstrom 4, der durch den Flüssigkeits/Feststoff-Abscheider fließt, gesammelt um ggf. durch Zusammenführen mit der SiC-Fraktion 3a bzw. 7a (10-20 Mikrometer SiC-Partikel) eine frische Drahtsäge-Schneidflüssigkeit für den Silizum-Schneidvorgang zu bilden. Der eisenfreie Feststoffpartikelstrom 5, der aus dem Flüssigkeits/Feststoff-Abscheider erhalten wird, wird über einen Schneckenförderer oder eine ähnliche Vorrichtung gefördert und durch Erhöhen der Temperatur und/oder Verringern des Drucks in dieser Einheit getrocknet, wodurch die verbleibende flüssige Phase verflüchtigt wird. Der Flüssigkeitsstrom 6 wird in ein Sammelgefäß gesammelte und kann zu alternativen Anwendungen transportiert werden. Der getrocknete Partikelstrom 7, der aus Silizium und Siliziumkarbid besteht, wird dann in ein druckskaliertes Vorform in einen Granulator-Reaktor in ein gewünschte Form - vorzugsweise in eine planare Form (z.B. Platte, Pille, Tablette) verdichtet, gepresst, gesintert. Druck und Wärme können simultan beispielsweise durch eine Sparktsintereinrichtung bereitgestellt werden.

Kerf- bzw. Slurry-Rohmaterial aus einer industriellen Silizium-Schneide-Quelle wurde obiger Reihe von Schritten unterzogen, einschließlich magnetischer Trennung, Fest/Flüssig-Trennung und Trocknung. Tabelle 1 zeigt einen Vergleich des Zusammensetzungsunterschieds zwischen Strom 1 und 7 nach Fig. 4.

**TABELLE 1 GDMS-Analyse. Konzentration in Gewichts-ppm**

| Konzentrationselement | B | P | Fe | Co | Ni | Cu | Zn | As | Zr | Mo |
|---|---|---|---|---|---|---|---|---|---|---|
| Strom 1 | 3,5 | 10 ~ | 3500 | 0,6 | 17 | 90 | 80 | 0,2 | 9 | 2,7 |
| Strom 7 | 1,7 | 5,5 | 370 | 0,4 | 6 | 5 | 1,4 | 0,2 | 10 | 1,3 |

Um den prozentualen Feststoffgehalt der Eingangsaufschlämmung zu optimieren, zu erhöhen oder zu verringern kann eine zusätzliche Flüssigkeit PEG oder/und Wasser zugesetzt werden. Der Prozentsatz an Feststoffen im Slurry bzw. der Suspension kann angehoben oder abgesenkt werden, um die Trennrate oder Effizienz des Fest-Flüssig-Abscheiders oder anderer Trennschritte zu beeinflussen. Ein Ziel für diesen Prozessschritt d.h. die Fest-Flüssig-Trennung kann darin bestehen, so viel wie möglich von den SiC-Partikeln zu entfernen, ohne wesentliche Mengen an Si zu verlieren.

Mindestens zwei Arten von Technologien können das leisten: (a) Sedimentations-Technologien unter Verwendung hauptsächlich der Schwerkraft (fortgeschrittener Klassifikator; Verdicker) oder der Zentrifugalkraft (Hydrozyklon, Zentrifuge); und (b) Filtration unter Verwendung von Filtern (nicht mit Sieben oder Querstromeinheiten). Die Absetz- und Filtrationsschritte können zusammen verwendet werden, um das Trennziel zu erreichen. Die angestrebte Ausgabe kann eine Suspension sein, die etwa 10 bis 20 Gew .-% Feststoffe mit einer Feststoffzusammensetzung von etwa 20 Gew .-% SiC (etwa <7 um Durchmesser), etwa 25 Gew .-% Stahl (etwa 0,1 bis 2 um Durchmesser) und 55 Gew .-% Silizium (ca. 0,1-2 µm Durchmesser).

Zentrifugen können verwendet werden, um große SiC-Partikel unter Verwendung von dem Fachmann bekannten Verfahren abzutrennen. Ein Zentrifugationsschritt zum Trennen von SiC kann jedoch in ein Verfahren eingebaut werden, das die Abtrennung von großen SiC von Rest ermöglichen kann.

Die Trocknungsstufe kann auf einer Temperatur von bis zu etwa 400 ° C, mehr als etwa 400 ° C, mindestens etwa 200 ° C oder mindestens etwa 300 ° C gehalten werden. Das Partikelgemisch kann mittel Wasserdampf getrocknet werden wobei das Trocknungsgas dann PEG-Komponenten enthalten kann.

Gegenstand der Erfindung ist ein Silizium enthaltendes Anodenmaterial umfassend Siliziumpartikel einer Partikelgröße im Bereich von 0,1 µm bis 200 µm, vorzugsweise von 0,1 µm bis 20 µm, insbesondere im Bereich von 0,1 µm bis kleiner 5 µm, sowie Kohlenstoff und Silizium enthaltende Partikel, die insbesondere eine Partikelgröße im Bereich von 0,1 µm bis 20 µm, insbesondere im Bereich von 0,1 µm bis kleiner 5 µm aufweisen, und optional Partikel mindestens einer allotropen Kohlenstoffmodifikation, die insbesondere eine Partikelgröße im Bereich von 0,1 µm bis 20 µm, insbesondere im Bereich von 0,1 µm bis kleiner 5 µm, aufweisen, und optional Eisen enthaltende Partikel, wie Edelstahlpartikel, wobei das Anodenmaterial einen Gehalt an Eisen von größer gleich 0,02 mg/kg, insbesondere größer gleich 0,05 mg/kg, optional bis 10 g/kg aufweist. Besonders bevorzugt weist das Anodenmaterial eine Gesamtzusammensetzung an partikulären Feststoffen auf, umfassend Silizium enthaltende Partikel, Kohlenstoff und Silizium enthaltende Partikel, Partikel mindestens einer allotropen Kohlenstoffmodifikation und Eisen enthaltenden Partikel, wobei der Gehalt an Eisen in der Gesamtzusammensetzung an partikulären Feststoffen größer gleich 0,05 mg/kg beträgt. Die Partikelgröße definierte die Abmessungen eines Partikels in allen Raumrichtungen (x,y,z-Achse), so dass ein Partikel bspw. mit Abmessungen von 0,1 bis 20 Mikrometer in keiner Raumrichtung eine Abmessung außerhalb dieses Bereiches aufweist.

Aufgrund der Herstellung weisen die Silziumpartikel eine für die Batterietechnische Anwendung bevorzugte Oberflächenrauigkeit bei gleichzeitig vorzugsweise polykristallinem Silizium im Partikel auf. Durch diese ungewöhnliche Kombination kann einerseits die Oberfläche eines Partikels mit gegebenem Durchmesser vergrößert werden und zugleich liegt das Silizium in einer gegenüber der Korrosion beständigeren Modifikation vor. Daher weist das Silizium enthaltendes Anodenmaterial umfassend Siliziumpartikel einer Partikelgröße im Bereich von 0,1 µm bis 20 µm vorzugsweise einen Reflexionsgrad von kleiner gleich 50% auf, insbesondere kleiner 40%, bevorzugt kleiner 10%. Zur Beurteilung der Reflexionseigenschaften der Sägereste wurde der diffuse Reflexionsgrad gewählt, welcher den gesamten von der Oberfläche reflektierenden Lichtstrom berücksichtigt. Die Messung erfolgt nach DIN 5036 Teil 3 mit einer Ulbrichtschen Kugel, einem Leuchtmittel mit konstantem Lichtstrom bei 25 Grad Celsius und einem kalibrierten Reflexionsnormal mit bekanntem Reflexionsgrad. Je nach Beleuchtungswinkel beträgt der Reflexionsgrad weniger als 50% bevorzugt weniger als 10%.

Eine typische Oberfläche der Siliziumpartikel kann kleiner 500 m²/g und größer 0,01 m²/g betragen.

Entsprechend einer besonders bevorzugten Ausführungsform der Erfindung wird ein Silizium enthaltendes Anodenmaterial beansprucht, umfassend Siliziumpartikel einer Partikelgröße im Bereich von 0,1 µm bis kleiner 5 µm, sowie Kohlenstoff und Silizium enthaltende Partikel einer Partikelgröße im Bereich von 0,1 µm bis kleiner 5 µm und optional Partikel mindestens einer allotropen Kohlenstoffmodifikation, insbesondere Diamant, einer Partikelgröße im Bereich von 0,1 µm bis kleiner 5 µm, wobei das Anodenmaterial, insbesondere in Bezug auf die partikulären Feststoffe, einen Gehalt an Eisen von größer gleich 0,02 mg/kg, bevorzugt größer gleich 0,05 mg/kg aufweist.

Nach einer bevorzugten Alternative weisen die Siliziumpartikel einen Gehalt an Eisen von größer gleich 0,02 mg/kg, insbesondere größer gleich 0,05 mg/kg, auf und/oder das Anodenmaterial weist Eisen enthaltende Partikel mit einem Gehalt von größer gleich 80 Gew.-% Eisen in Bezug auf die Gesamtzusammensetzung der Eisen enthaltenden Partikel von 100 Gew.% auf, wobei die Eisen enthaltenden Partikel vorzugsweise Edelstahlpartikel sind.

Nach einer Ausführungsform ist Gegenstand der Erfindung ein Anodenmaterial, das umfasst i) partikuläre Feststoffe und ii) eine fluide Matrix, wobei die fluide Matrix die partikulären Feststoffe zumindest teilweise bis vollständig umhüllt, wobei die i) partikulären Feststoffe umfassen Siliziumpartikel, Siliziumdioxid, Siliziumcarbid, Eisen enthaltende Partikel, wie Edelstahlpartikel, und optional Siliziumdioxidpartikel, wobei die Gesamtzusammensetzung der partikulären Feststoffe des Anodenmaterials 100 Gew.-% beträgt, und die ii) fluide Matrix umfasst mindestens ein Polyalkylenoxid oder ein Gemisch von Polyalkylenoxiden, und optional Wasser, wobei die Gesamtzusammensetzung der fluiden Matrix 100 Gew.-% beträgt, und, wobei i) und ii) im Gewichtsverhältnis von 70 : 30 bis 98 : 2 vorliegen, und der Gehalt an Eisen in der Gesamtzusammensetzung des Anodenmaterials 0,02 mg/kg bis 100 mg/kg, insbesondere 0,05 mg/kg bis 100 mg/kg, bevorzugt von 0,1 mg/ bis 75 mg/kg beträgt. Nach bevorzugten Ausführungsformen liegt ein Gewichtsverhältnis von i) und ii) im Verhältnis von 60 : 40 bis 99 : 1, insbesondere 60 : 40 bis 90 : 10 vor, bevorzugt 70 : 30 bis 95:5.

Nach einer Ausführungsform ist Gegenstand der Erfindung ein Anodenmaterial, das umfasst Siliziumpartikel einer Partikelgröße im Bereich von 0,1 µm bis 5 µm sowie Kohlenstoff und Silizium enthaltende Partikel und optional Partikel mindestens einer allotropen Kohlenstoffmodifikation, wobei das Anodenmaterial einen Gehalt an Eisen von größer gleich 0,02 mg/kg aufweist, wobei das Anodenmaterial umfasst 5 bis 20 Gew.-% Polyether, insbesondere Polyethylenglykol, insbesondere 10 Gew.-%, 5 bis 20 Gew.-% H₂O, insbesondere 5 bis 15 Gew.-% H₂O, 25 bis 40 Gew.-% SiC, insbesondere 30 bis 40 Gew.-% SiC, 25 bis 45 Gew.-% Silizium, insbesondere 30 bis 40 Gew.-% Silizium, 2 bis 7,5 Gew.-% Eisen, insbesondere 2 bis 6 Gew.-% Eisen, 2 bis 10 Gew.-% Siliziumdioxid, insbesondere 2 bis 8 Gew.-% SiO₂. Die Partikelgröße aller Partikel ist vorzugsweise größer 0 µm bis 3 µm.

In der fluiden Matrix sind die partikulären Feststoffe des Anodenmaterials vorzugweise eingebettet. Die Matrix hat einerseits die Funktion das Anodenmaterial, insbesondere die Siliziumpartikel, vor einer Korrosion in einem alkalischen Medium zu schützen sowie auch die Lager- und Dosierbarkeit des Anodenmaterials zu vereinfachen. So kann die fluide Matrix auch die Fließeigenschaften des Anodenmaterials positiv beeinflussen. In einer Ausführungsform der Erfindung ist das Anodenmaterial eine fließfähige Suspension, die in einen Anodenraum eingefüllt, vorzugsweise eingepumpt, werden kann.

Nach einer bevorzugten Ausführungsform weisen im Anodenmaterial i) die Siliziumpartikel einen Gehalt an Eisen von größer gleich 0,02 mg/kg auf, bevorzugt größer gleich 0,05 mg/kg, und/oder das Anodenmaterial umfasst ii) Eisen enthaltende Partikel mit einem Gehalt an Eisen von größer gleich 90 Gew.-% in Bezug auf die Eisen enthaltenden Partikel mit einem Gehalt von 100 Gew.-%, wobei die Eisen enthaltenden Partikel vorzugsweise eine Edelstahllegierung umfassen. Typische geeignete Edelstahllegierungen umfassen: WNr. 1.4301 (X5CrNi18-10), AISI 304, (V2A), SUS304; WNr. 1.4306 (X2CrNi19-11), AISI 304L; WNr. 1.4307 (X2CrNi18-9), AISI 304L, (V2A); WNr. 1.4429 (X2CrNiMoN17-13-3), AISI 316LN; WNr. 1.4541 (X6CrNiTi18-10), AISI 321, (V2A); WNr. 1.4562 (X1NiCrMoCu32-28-7). So können die Edelstahllegierungen die Elemente umfassen Molybdän (Mo), Vanadium (V), Kobalt (Co), Chrom (Cr), Titan (Ti), Nickel (Ni) und/oder Aluminium (AI). Daher weist die Edelstahllegierung vorzugsweise einen Gehalt von größer gleich 0,0001 mg/kg, insbesondere größer gleich 0,01 mg/kg mindestens eines der nachfolgenden genannten Metalle ausgewählt aus Mo, V, Co, Cr, Ti, Ni und AI auf. Bevorzugt umfassen die Metalle i) Mo, V und Co, ii) Cr, Mo und V oder iii) Ti, Cr, Ni und AI.

Nach einer weiteren Ausführungsform ist ein Anodenmaterial bevorzugt, dass einen Gehalt aufweist an Eisen größer gleich 0,05 mg/kg, Aluminium größer gleich 0,01 mg/kg, Kohlenstoff größer gleich 0,01 mg/kg, Calcium größer gleich 0,01 mg/kg, und optional Titan größer gleich 0,001 mg/kg, und optional Kupfer größer gleich 0,001 mg/kg. Ferner ist ein Anodenmaterial bevorzugt, dass einen Gehalt aufweist an Eisen größer gleich 5 mg/kg, Aluminium größer gleich 0,5 mg/kg, Calcium größer gleich 5 mg/kg, und optional Titan größer gleich 0,01 mg/kg, und optional Kupfer größer gleich 0,05 mg/kg.

Dabei ist es bevorzugt, wenn das Anodenmaterial in der Gesamtzusammensetzung umfassend Siliziumpartikel sowie Kohlenstoff und Silizium enthaltende Partikel, insbesondere Siliciumcarbid enthaltende Partikel, und optional Partikel mindestens einer allotropen Kohlenstoffmodifikation, vorzugsweise Diamant, und optional Eisen enthaltenden Partikel, insbesondere Edelstahl enthaltende Partikel, und optional Siliziumdioxid enthaltende Partikel, einen Eisengehalt von größer gleich 50 mg/kg, insbesondere von 50 bis 85 mg/kg Anodenmaterial, aufweist. Besonders bevorzugt liegen im Wesentlichen Diamant und Eisen enthaltende Partikel teilweise als eine Einheit vor.

Ferner ist ein Anodenmaterial bevorzugt, das in der Gesamtzusammensetzung umfasst
30 bis 93,5 Gew.-% Siliziumpartikel,
1 bis 65 Gew.-% Kohlenstoff und Silizium enthaltende Partikel, insbesondere Siliciumcarbid,
0 bis 10 Gew.% Partikel mindestens einer allotropen Kohlenstoffmodifikation, insbesondere Diamant,
1 bis 10 Gew.-% Siliziumdioxid, insbesondere Siliziumdioxidpartikel oder Siliziumdioxid als Bestandteil der Siliziumpartikel,
und der Gehalt an Eisen im Anodenmaterial beträgt größer gleich 50 mg/kg, bevorzugt beträgt der Gehalt an Eisen von 50 bis 85 mg/kg und optional weist das Anodenmaterial einen Gehalt an Kupfer von größer gleich 0,1 mg/kg und/oder einen Gehalt an Zink von größer gleich 0,01 mg/kg auf, und wobei die Gesamtzusammensetzung des Anodenmaterials 100 Gew.-% beträgt.

Entsprechend einer besonders bevorzugten Ausführungsform der Erfindung wird ein Silizium enthaltendes Anodenmaterial beansprucht, umfassend Siliziumpartikel einer Partikelgröße im Bereich von 0,1 µm bis kleiner 5 µm, sowie Kohlenstoff und Silizium enthaltende Partikel einer Partikelgröße im Bereich von 0,1 µm bis kleiner 5 µm und optional Partikel mindestens einer allotropen Kohlenstoffmodifikation, insbesondere Diamant, einer Partikelgröße im Bereich von 0,1 µm bis kleiner 5 µm, wobei die Siliziumpartikel einen Gehalt an Eisen von größer gleich 0,02 mg/kg, bevorzugt größer gleich 0,05 mg/kg aufweisen.

Alle in dem Anodenmaterial vorhandenen Partikel werden als partikuläre Feststoffe bezeichnet. Generell kann das Anodenmaterial in einer Ausführungsform eine Komponente umfassen, die i) partikuläre Feststoffe umfassend Siliziumpartikel, SiC, SiO₂, Diamant, Eisenpartikel umfasst, und in einer weiteren Alternative kann das Anodenmaterial neben den i) partikulären Feststoffen auch ii) eine fluide Matrix umfassen. Die fluide Matrix umfasst vorzugsweise Polyether.

Ferner ist ein Anodenmaterial bevorzugt, das einen Gehalt an Eisen größer gleich 50 mg/kg in Bezug auf die Gesamtzusammensetzung ausgewählt aus Siliziumpartikeln, Kohlenstoff und Silizium enthaltenden Partikeln und optional Partikeln mindestens einer allotropen Kohlenstoffmodifikation, vorzugsweise Diamant, und Eisen enthaltenden Partikeln, insbesondere Partikeln von Edelstahl, aufweist, insbesondere einen Eisengehalt größer gleich 55 mg/kg aufweist. Der Gehalt an Eisen im Anodenmaterial kann bevorzugt von 0,5 mg/kg bis 70 g/kg in Bezug auf die Gesamtzusammensetzung ausgewählt aus Siliziumpartikeln, Kohlenstoff und Silizium enthaltenden Partikeln, wie SiC, und optional Partikeln mindestens einer allotropen Kohlenstoffmodifikation, Eisen enthaltenden Partikeln, insbesondere Partikeln von Edelstahl, und optional Siliziumdioxid als Bestandteil von Siliziumpartikeln und/oder optional Siliziumdioxidpartikeln betragen. So kann der Gehalt an Eisen im Anodenmaterial bevorzugt von 0,5 g/kg bis 50 g/kg in Bezug auf eine Gesamtzusammensetzung umfassend 30 bis 95 Gew.-% Siliziumpartikel, 0,1 bis 70 Gew.-% Kohlenstoff und Silizium enthaltende Partikel, wie SiC, und 0 bis 5 Gew.-% Diamantpartikel, 0,001 bis 15 Gew.-% Eisen enthaltende Partikel, insbesondere Partikel von Edelstahl, und 0,1 bis 15 Gew.-% Siliziumdioxid betragen, wobei die Gesamtzusammen-setzung auf 100 Gew.-% partikuläre Feststoffe bezogen ist. Optional kann das Anodenmaterial zusätzlich eine fluide Matrix enthalten.

Die Partikelgrößenverteilung eines nach Abtrennung von PEG aus den Sägesuspensionen erhältlichen Materials (Koppelprodukt) liegt im Bereich von 1 nm bis 20 µm, wobei insbesondere im Partikelgrößenbereich von 2 - 3 µm, sowie in dem Bereich von 9 bis 10 µm jeweils ein Maximum auftritt. Diese beiden Maxima können dem sehr feinen Siliziumabrieb als Siliziumpartikel einer Partikelgröße kleiner 3 µm und den gröberen SiC-Schneidkörnern im Bereich von 9 bis 10 µm zugeordnet werden.

Weiter bevorzugt ist ein Silizium enthaltendes Anodenmaterial umfassend Siliziumpartikel einer Partikelgröße im Bereich von 0,1 µm bis kleiner 3 µm, sowie Kohlenstoff und Silizium enthaltende Partikel einer Partikelgröße im Bereich von 0,1 µm bis kleiner 3 µm und optional Partikel mindestens einer allotropen Kohlenstoffmodifikation einer Partikelgröße im Bereich von 0,1 µm bis kleiner 3 µm, wobei die Siliziumpartikel einen Gehalt an Eisen von größer gleich 0,05 mg/kg aufweisen, und insbesondere der Gehalt an Eisen in der Gesamtzusammensetzung (in Bezug auf die partikulären Feststoffe) größer gleich 50 mg/kg beträgt.

Die Siliziumpartikel können vorzugsweise kristallin sein, wobei polykristalline Siliziumpartikel mit nanokristallinen Domänen bevorzugt sind.

Ferner ist ein Anodenmaterial bevorzugt, welches Siliziumpartikel umfasst, die einen Gehalt aufweisen an Eisen größer gleich 0,05 mg/kg, insbesondere größer gleich 0,1 mg/kg bis 78 mg/kg, bevorzugt von 0,1 mg/kg bis 10 mg/kg, weiter bevorzugt von 0,1 bis 5 mg/kg, Aluminium größer gleich 0,01 mg/kg, insbesondere größer gleich 0,1 mg/kg bis 5 mg/kg, Kohlenstoff größer gleich 0,01 mg/kg, insbesondere größer gleich 0,1 mg/kg bis 50 000 mg/kg, Calcium größer gleich 0,01 mg/kg, insbesondere größer gleich 0,1 mg/kg bis 50 mg/kg, und optional Titan größer gleich 0,001 mg/kg, insbesondere größer gleich 0,01 mg/kg bis 1,0 mg/kg, optional Sauerstoff größer gleich 0,001 mg/kg, insbesondere größer gleich 0,01 mg/kg bis 1,0 mg/kg und optional Kupfer größer gleich 0,001 mg/kg, insbesondere größer gleich 0,01 mg/kg bis 1,0 mg/kg.

Gleichfalls kann ein bevorzugtes Anodenmaterial Siliziumpartikel umfassen, die einen Gehalt aufweisen an Eisen größer gleich 0,75 mg/kg, insbesondere größer gleich 1 mg/kg bis 20 mg/kg, Aluminium größer gleich 0,5 mg/kg, insbesondere größer gleich 0,8 mg/kg optional bis 5 mg/kg, Calcium größer gleich 2 mg/kg, insbesondere größer gleich 5 mg/kg optional bis 20 mg/kg, optional Sauerstoff größer gleich 0,01 mg/kg, insbesondere größer gleich 0,1 mg/kg bis 1,0 mg/kg optional bis 1000 mg/kg und optional Kupfer größer gleich 0,05 mg/kg, insbesondere größer gleich 0,1 mg/kg optional bis 100 mg/kg und optional Zink größer gleich 0,01 mg/kg und optional Nickel größer gleich 0,001 mg/kg.

Mit PEG ergeben sich in etwa Anteile von bis zu 20 Gew.-% fluide Matrix optional enthaltend Wasser als Restfeuchte. Ein beispielhaftes Anodenmaterial kann umfassen 36 Gew.-% SiC, 33 Gew.-% Silizium, 5 Gew.-% Eisen, 6 Gew.-% SiO₂ und auf 100 Gew.-% des Anodenmaterials PEG. Daneben können noch Kupfer und Zink, sowie Diamant, das als Abrasiv genutzt wurde und Nickel, das häufig zur Bindung der Diamanten dient, enthalten sein. Die Partikelgröße liegt für gewöhnlich bei 1 nm bis 5 µm, wobei insbesondere aber auch größere SiC Partikel bis 15 µm vorkommen.

Die Reindichte des Anodenmaterials kann mittels Helium-Pyknometer (Fa. Micromeretics) bestimmt werden und kann 2,3 g/cm³, mit höheren Fremdmetallanteilen bis zu 2,55 g/cm³ betragen. Zudem kann das Anodenmaterial einen durchschnittlichen Gehalt an fluider Matrix von 12,5 Gew.-% enthalten. So kann ein erfindungsgemäßes Anodenmaterial umfassen i) partikuläre Feststoffe von 99 bis 75 Gew.-% und ii) fluide Matrix von 1 bis 25 Gew.-%, wobei die Gesamtzusammensetzung 100 Gew.-% beträgt.

Ferner ist ein Anodenmaterial bevorzugt, das in Bezug auf die Gesamtzusammensetzung ausgewählt aus Siliziumpartikeln, Kohlenstoff und Silizium enthaltenden Partikeln und optional Partikeln mindestens einer allotropen Kohlenstoffmodifikation und optional Eisen enthaltenden Partikeln einen Gehalt an Silizium von 60 bis 90 Gew.-% aufweist.

Gleichfalls ist nach einer Ausführungsform ein Anodenmaterial bevorzugt, das umfasst Siliziumpartikel einer Partikelgröße im Bereich von 0,1 µm bis 10 µm, bevorzugt von 5 bis 20 µm, sowie Siliciumcarbid, insbesondere einer Partikelgröße von 1 bis 60 µm, bevorzugt von 5 bis 20 µm, und optional Partikel einer allotropen Kohlenstoffmodifikation ausgewählt aus Diamant, Graphit, Fulleren, Graphen, insbesondere Diamant, bevorzugt einer Partikelgröße im Bereich von 1 bis 60 µm, bevorzugt von 5 bis 20 µm, und optional Eisen enthaltende Partikel, insbesondere als partikuläre Feststoffe, wobei das Anodenmaterial in Bezug auf die partikulären Feststoffe vorzugsweise aufweist einen Gehalt an Eisen größer gleich 0,75 mg/kg, insbesondere größer gleich 1 mg/kg bis 20 mg/kg, Aluminium größer gleich 0,5 mg/kg, insbesondere größer gleich 0,8 mg/kg, optional bis 5 mg/kg, Calcium größer gleich 2 mg/kg, insbesondere größer gleich 5 mg/kg, optional bis 20 mg/kg, und optional Kupfer größer gleich 0,05 mg/kg, insbesondere größer gleich 0,1 mg/kg optional bis 100 mg/kg und optional Zink größer gleich 0,01 mg/kg und optional Nickel größer gleich 0,001 mg/kg.

Das Anodenmaterial umfasst vorzugsweise eine fluide Matrix, die mindestens einen Polyether umfasst. Insbesondere ist der Polyether ausgewählt aus Polyalkylenoxiden, die vorzugsweise terminal Hydroxy, Alkoxy, Ester-Gruppen aufweisen, oder aus einem Gemisch von Polyalkylenoxiden. Das Alkylen ist ausgewählt aus bivalenten Alkylenen, die 1 bis 6 C-Atome umfassen. Besonders bevorzugt ist das Alkylen ausgewählt aus Methylen, Ethylen, n-Propylen, iso-Propylen, wie 1-Methyl-Ethylen oder 2-Methyl-Ethylen, und Butylen. Bevorzugte Polyalkylenoxide umfassen Polyethylenglykol, Polypropylenglykol. Besonders bevorzugt ist Polyethylenglykol.

Die fluide Matrix im Anodenmaterial benetzt in der Regel die Oberflächen der Siliziumpartikel, der Kohlenstoff und Silizium enthaltenden Partikel und optional Partikel mindestens einer allotropen Kohlenstoffmodifikation und optional von Siliziumdioxidpartikeln zumindest teilweise bis vollständig. Gegebenenfalls sind die Oberflächen der partikulären Feststoffe durch die fluide Matrix adsorptiv belegt. Die Oberfläche der Siliziumpartikel und optional der Kohlenstoff und Silizium enthaltenden Partikel weist vorzugsweise einen Reflexionsgrad von kleiner gleich 50% auf, insbesondere kleiner 40%, bevorzugt kleiner 10%. Eine solche Oberfläche ist für die Anwendung als Anode aufgrund der notwendigen Benetzung durch eine Elektrolytflüssigkeit gegenüber einer Oberfläche mit hohem Reflexionsgrad wie beispielsweise einer spiegelnden Oberfläche für den Wirkungsgrad der Batterie bevorzugt.

Nach einer Ausführungsform ist Gegenstand der Erfindung ein Anodenmaterial, das umfasst i) partikuläre Feststoffe und ii) eine fluide Matrix, die insbesondere die partikulären Feststoffe umhüllt, wobei die i) partikularen Feststoffe umfassen
35 bis 55 Gew.-% Silizium,
5 bis 15 Gew.-% Siliziumdioxid,
35 bis 55 Gew.-% Siliziumcarbid,
3 bis 8,5 Gew.-% Eisen, wobei die Gesamtzusammensetzung der partikulären Feststoffe des Anodenmaterials 100 Gew.-% beträgt und, die ii) fluide Matrix umfasst mindestens ein Polyalkylenoxid, oder ein Gemisch von Polyalkylenoxiden, wobei die Alkylene ausgewählt sind aus bivalenten Alkylen, die 1 bis 6 C-Atome umfassen, und die bivalenten Alkylene vorzugsweise ausgewählt sind aus Methylen, Ethylen, n-Propylen, iso-Propylen, wie 1-Methyl-Ethylen oder 2-Methyl-Ethylen, und Butylen, wobei die Gesamtzusammensetzung der fluiden Matrix 100 Gew.-% beträgt, und vorzugweise i) und ii) im Gewichtsverhältnis von i) 70 bis 95 Gew.-% und ii) von 5 bis 30 Gew.-% in Bezug auf die Gesamtzusammensetzung des Anodenmaterial von 100 Gew.-% vorliegen. Bevorzugte Polyalkylenoxide umfassen Polyethylenglykol, Polypropylenglykol, bevorzugt Hydroxy-, Methoxy-, Actetoxy-, Acetyl- oder Carboxyl-terminiert. bevorzugt nicht Carboxyl-terminiert.

Das Polyalkylenoxid kann ausgewählt sein aus HO(C₂H₄O)ₙH mit n größer gleich 4, insbesondere mit n gleich 4 bis 50, bevorzugt n = 2 bis 25, oder n = 2 bis 14, besonders bevorzugt ist n = 2 bis 4, R¹O(C₂H₄O)ₙ₁R² mit R¹ und R² jeweils unabhängig ausgewählt aus -H, -Alkyl, -C=O-Alkyl mit Alkyl jeweils unabhängig mit 1 bis 6 C-Atomen, insbesondere Alkyl mit 1 bis 4 C-Atomen, mit n1 = größer gleich 4, insbesondere mit n1 gleich 4 bis 50, bevorzugt n1 = 2 bis 25, oder n1 = 2 bis 14, besonders bevorzugt ist n1 = 2 bis 4, und wobei R¹ oder R² nicht gleich H sind, HO(C₃H₆O)ₘH mit m größer gleich 4, insbesondere mit m gleich 4 bis 50, bevorzugt m = 2 bis 25, oder m = 2 bis 14, besonders bevorzugt ist m = 2 bis 4, R³O(C₃H₆O)ₘ₁R⁴ mit R³ und R⁴ jeweils unabhängig ausgewählt aus H, Alkyl, -C=O-Alkyl, mit Alkyl jeweils unabhängig mit 1 bis 6 C-Atomen, insbesondere Alkyl, m1 größer gleich 4, insbesondere mit m1 gleich 4 bis 50, bevorzugt m1 = 2 bis 25, oder m1 = 2 bis 14, besonders bevorzugt ist m1 = 2 bis 4, wobei R³ oder R⁴ nicht gleich H sind. Polyether der vorgenannten Polyalkylenoxide umfassend Ethylenoxid und Propylenoxid-Einheiten und Gemischen von Polyalkylenoxiden umfassend mindestens zwei unterschiedliche Polyalkylenoxide. Bevorzugt sind Polyalkylenoxide oder Gemische mit Molekulargewichten größer gleich 150 g/mol, insbesondere bis 1000 g/mol. Besonders bevorzugt sind PEG200, wie HO(C₂H₄O)ₙH mit Mw 190 - 210 g/mol oder PEG300 bis PEG600.

Gleichfalls Gegenstand der Erfindung ist ein Kit umfassend eine Anode, die zusammen mit dem erfindungsgemäßen Anodenmaterial genutzt werden kann. Die Anode weist einen Anodenraum auf, der so ausgestaltet ist, dass das Anodenmaterial diskontinuierlich oder kontinuierlich durch den Anodenraum gepumpt werden kann. Dazu weist die Anode einen Anodenraum auf, der einen oder mehrere Kontakte für einen Elektronentransport aufweist sowie eine oder mehrere für den Elektrolyt durchlässige Separatoren, wobei die Separatoren umfassen eine Membran, Filter, Folie mit definierten Durchlässen, Netz, poröse Keramik, wobei der Anodenraum eine Einlassöffnung oder mehrere Einlassöffnungen für die Zufuhr von Anodenmaterial und eine Auslassöffnung oder mehrere Auslassöffnungen aufweist, die vorzugsweise an gegenüberliegenden Positionen des Anodenraums angeordnet sind. Der Anodenraum ist vorzugsweise mit einem erfindungsgemäßen Anodenmaterial und optional einem Kohlenstoff enthaltenden Leitfähigkeitsvermittler befüllbar oder weist das Anodenmaterial und optional einen Kohlenstoff enthaltenden Leitfähigkeitsvermittler, wobei das Anodenmaterial und optional Kohlenstoff enthaltender Leitfähigkeitsvermittler im Anodenraum teilweise bis vollständig kontinuierlich oder diskontinuierlich über die Einlassöffnung(en) und Auslassöffnung(en) austauschbar sind. Die Anode können daher als eine Durchflusszelle ausgebildet sein, die vorzugsweise batchweise oder kontinuierlich oder in bestimmten Zyklen mit einem frischen fließfähigen Anodenmaterial und optional einem Kohlenstoff enthaltendem Leitfähigkeitsvermittler befüllt wird. Die Membran kann aus einem inerten Polymer gebildet sein, bevorzugt aus einem Polyfluorpolyethylen, Polyfluorpolypropylen oder Co-Polymeren davon.

Der Separator kann umfassen Filterpapier, polymere Membran, metallische Membran, keramische Membran, Membran aus Hybridmaterial. Eine polymere Membran kann vorzugsweise als Material Polyethylen, Polypropylen oder ein inertes Polymer oder Co-Polymer umfassen. Bevorzugt sind mikroporöse Polypropylenfilme, insbesondere einer Stärke von 0,028 mm bis 0,1 mm, bevorzugt von 0,038 mm bis 0,75 mm, wobei vorzugsweise die Porosität 45 Vol.-% bis 90 Vol.-%, insbesondere von 50 bis 80 Vol.-%, bevorzugt von 55 bis 70 Vol.-% in Bezug auf das Gesamtvolumen der Membran beträgt.

Gleichfalls Gegenstand der Erfindung ist ein Elektronen liefernder Kraftstoff, umfassend das erfindungsgemäße Anodenmaterial zur Verwendung als Elektronenquelle in einer Anode einer Primärzelle. Die Primärzelle weist vorzugsweise einn Elektrolyten auf, der umfasst wässrige Hydroxid-Anionen, Carbonat-Anionen oder Halogenid-Anionen, insbesondere Fluorid-Anionen und/oder Chlorid-Anionen. Der Elektrolyt ist vorzugsweise ein wässriger Elektrolyt und umfasst mindestens ein Salz ausgewählt aus Mangandifluorid, Mangandichlorid, Ammoniumfluorid, Kaliumhydroxid, Natriumhydroxid, Ammoniumchlorid, Natriumchlorid, Natriumfluorid, Kaliumfluorid und/oder Salz einer Carbonsäure. Bevorzugt umfasst der Elektrolyt Mangandifluorid, Mangandichlorid und/oder Ammoniumfluorid und optional Kaliumfluorid.

Ferner ist Gegenstand der Erfindung eine elektrochemische Primärzelle aufweisend eine Anode, eine Kathode, einen Elektrolyten sowie mindestens einen Separator, wobei der Separator die Kathode und die Anode voneinander separiert, und die Kathode eine Luftkathode umfassend Silber als Katalysator ist oder die Kathode umfasst als Material Mangandioxid und optional einen Kohlenstoff enthaltenden Leitfähigkeitsvermittler, wobei die Anode ein erfindungsgemäßes Anodenmaterial und optional einen Kohlenstoff enthaltenden Leitfähigkeitsvermittler umfasst.

Dabei ist es weiter besonders bevorzugt, wenn die Anode, insbesondere das Anodenmaterial, insbesondere im geladenen Zustand der Primärzelle, kein Lithium umfasst, vorzugsweise keine Lithium-Ionen, im Konzentrationsbereich von größer gleich 1000 Gew-ppm, größer gleich 10 Gew.-ppm aufweist. Besonders bevorzugt weist das Anodenmaterial kleiner 1 Gew.-ppm Lithium-Atome auf. Vorzugsweise weist das Anodenmaterial kleiner 10²¹ Lithium-Atome/cm³ Siliziumpartikel auf. Des Weiteren ist es bevorzugt, wenn im Elektrolyten die Konzentration an Lithium, insbesondere Lithium-Ionen, kleiner gleich 1000 Gew.-ppm, insbesondere kleiner gleich 100 Gew.-ppm, bevorzugt kleiner gleich 10 Gew.-ppm beträgt.

Gegenstand der Erfind ist eine Primärzelle umfassend Silizium-Partikel, die einen Gehalt an Bor von 10 Gew.-ppm bis 1,8 Gew.-% aufweisen.

Die Volumendichte Anodenmaterials Silizium beträgt zwischen 0,1 bis 2,5 g/cm³, bevorzugt 1 bis 2,3 g/cm³ besonders bevorzugt 1,3 bis 2,05 g/cm³.

Nach einer weiteren Alternative weist die Primärzelle an der Luftkathode einen Lufteinlass auf, der eine Gas durchlässige Membran sein kann. Bevorzugt ist eine Membran aus einem inerten Polymer, bevorzugt aus einem Polyfluorpolyethylen, Polyfluorpolypropylen oder Co-Polymeren davon. Der Aufbau der Luftkathode ist in der Regel eine Sandwichbauweise umfassend eine Gas durchlässige Membran, ein metallisches Netz zur Stromleitung und mindestens einen Katalysator, insbesondere einen porösen Katalysator.

Nach einer weiteren Ausführungsform wird die Verwendung des Anodenmaterials als Elektronen liefernder Kraftstoff in einer Primärzelle beansprucht, wobei insbesondere die Verwendung des Anodenmaterials in einem wässrigen, alkalischen Elektrolyten erfolgt.

Nachfolgend wird die Erfindung anhand eines Beispiels beschrieben, ohne die Erfindung auf dieses Beispiel zu beschränken.

### Ausführungsbeispiel:

Ein Rückstand oder ein aufbereiteter Rückstand aus der mechanischen Bearbeitung von Siliziumprodukten wird beispielhaft als Anodenmaterial eingesetzt. Anhand dieses Beispiels einer Si-Pulver Batterie kann eine nennenswerte elektrische Leistungsdichte generiert werden.

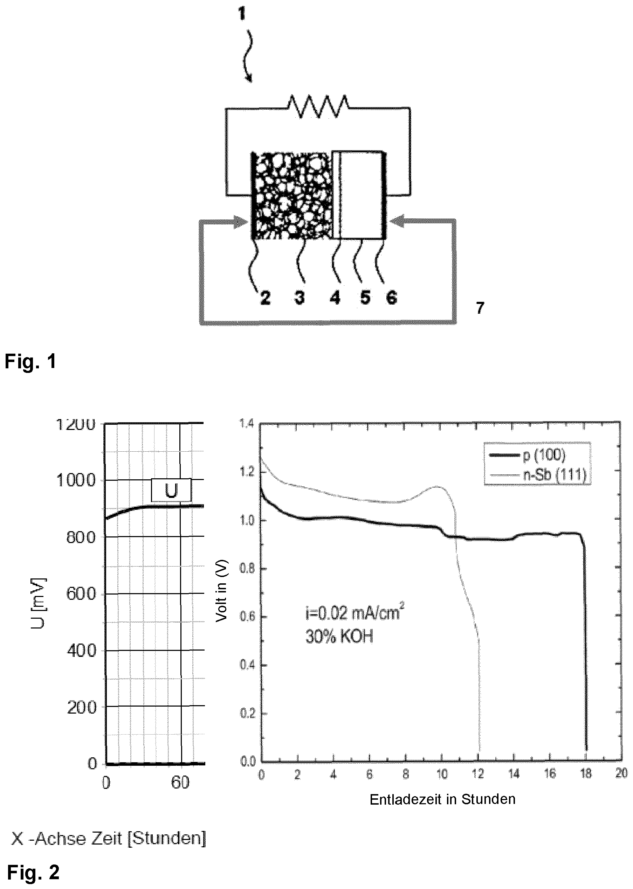

Zunächst wurde der Rückstand aus der mechanischen Bearbeitung von Siliziumprodukten (Anodenmaterial) mit zusätzlichem Leitruß (Vulcan) versetzt und als Anoden-zusammensetzung gut gemörsert, um einen guten Kontakt zwischen aktivem Material (z.B. Si, SiC) und Leitfähigkeitsvermittler (Leitruß) zu gewährleisten und anschließend jeweils durch Zugabe einer geeigneten Menge Elektrolytflüssigkeit im Mörser zu einer streichfähigen Paste verrieben. Diese Paste wurde in den Anodenraum einer Anode hineingestrichen. Als Separator wurde ein mit Elektrolytflüssigkeit benetztes Stück Filterpapier verwendet. Die Paste im Anodenraum wurde so glattgestrichen, dass eine leichte Wölbung vorhanden war, so dass sichergestellt wurde, dass der anschließend mit dem Montageschraubstock erzeugte Anpressdruck vor Allem die Elektrodenpasten komprimierte, so dass ein guter Kontakt zwischen aktivem Material, d.h. dem Anodenmaterial, und dem Leitfähigkeitsvermittler gegeben war. Dass eine hinreichende Leitfähigkeit in den Elektrodenpasten vorlag, konnte dadurch gezeigt werden, dass während einiger Messungen der Anpressdruck verändert wurde. Hierbei wurde in keinem Fall eine nennenswerte elektrische Änderung beobachtet. Die Kathode wurde auf MnO₂-Basis bereitgestellt. Figur 1 zeigt einen schematischen Aufbau einer Silizium-Primärbatterie mit 1: Ohmscher Lastwiderstand, 2: Anodischer Stromsammler, 3: Siliziumkomposit-Anode (Si-SiC-C-imprägniert mit Elektrolyt, hier mit Anodenmaterial und optional einen Kohlenstoff enthaltenden Leitfähigkeitsvermittler), 4: Separator (Filtrierpapier imprägniert mit Elektrolyt), 5: Kathode (MnO₂-C-imprägniert mit Elektrolyt), 6: Kathodischer Stromsammler, 7: Klammer (mechanischer Druck auf Zelle). In einem Versuch (V1) mit einer Si-Batterie wurde das Belastungsdiagramm gemäß Figur 2 der Batterie 1 (Anodenmaterial: 30 Gew.-% Si-Säge-Rückstand (Anodenmaterial) + Vulcan-XC72R, Elektrolyt: MnF₂-Elektrolyt, Kathodenmaterial: 90 Gew.-% MnO₂, batterygrade (Tosoh) + Graphit) unter konstanter 0,2 mA/cm² Belastung aufgenommen. Die 30 Gew.-% Sägerückstand bestanden aus PEG mit einem Anteil von 1 Gew.-%, 10 Gew.-% H2O, 36 Gew.-% SiC, 33 Gew.-% Silzium, 5 Gew.-% Eisen, 6 Gew.-% SiO₂, Spurenelemente summieren sich auf ca. 1 Gew-% auf und wurden vernachlässigt. Die Partikelgröße aller Partikel bewegt sich zwischen 0,1 und 20 Mikrometer. Die Batterie zeigte unter konstanter spezifischer Belastung von 0,2 mA/cm2 eine nahezu konstante Zellspannung von 0,9 Volt über mehr als 60 Betriebsstunden auf.

Die Partikelgröße aller Partikel ist vorzugsweise größer 0,1 µm und kleiner 10 µm. Die Batterie funktionierte gemäß dem Diagramm links in der Figur 2 und wies gegenüber dem Stand der Technik aus US8835060B2 (Diagramm rechts) in Figur 2 eine verbessere Performance auf: 0,02mA/cm2*0,95V langsam fallend über 18 Stunden vs. 0,2 mA/cm2*0,9V über 18 Stunden woraus sich die abgegebene spezifische Leistung nahezu um Faktor 10 unterscheidet.

Figur 3 zeigt die Partikelgrößenverteilung des Sägerückstandes wie es als Anodenmaterial verwendet werden kann (y-Achse: q3lg, x-Achse: Partikelgröße in Mikrometern.

Die Verwendung des Si-Säge-Rückstandes als Anodenmaterial kann auch in Lösung als sog. Suspension erfolgen. Hier wurde überraschend festgestellt, dass eine solche Suspension des Anodenmaterials umfassend optional einen Kohlenstoff enthaltenden Leitfähigkeitsvermittler bspw. als Ruß-Siliziumsuspension in Wasser, wie konventioneller flüssiger Kraftstoff in die Anode (Separator bspw. Anodengitter mit Netz) des Energiewandlersystems eingebracht werden kann. Prinzipiell kann somit ein Aufladen der Batterie mit Anodenmaterial an der bestehenden "Tankstellen" Infrastruktur praktisch ermöglicht werden. Die örtliche Verfügbarkeit des Anodenmaterials ist somit einfach zu gewährleisten. Auch benötigte Metallhydroxide (z.B. KOH) können ebenfalls unter Einsatz von erneuerbaren Energien hergestellt und über die Tankstelleninfrastruktur verteilt bzw. getankt werden. Überraschend wurde gefunden, dass die bislang den Einsatz verhindernde Selbstauflösung des Siliziums in Natronlauge/Kalilauge (Korrosion) durch das vorhandene PEG eine drastische Reduktion dieser Selbstauflösung des Siliziums bewirkt. Diese Erfindung ermöglicht also die Nutzung von Silizium-Säge- Rückständen grundsätzlich als preiswertes Anodenmaterial. Das oxidierte Silizium ist unbedenklich.

## Patentansprüche

1. Silizium enthaltendes Anodenmaterial, **dadurch gekennzeichnet, dass** das Anodenmaterial umfasst Siliziumpartikel einer Partikelgröße im Bereich von 0,1 µm bis 20 µm sowie Kohlenstoff und Silizium enthaltende Partikel und optional Partikel mindestens einer allotropen Kohlenstoffmodifikation, wobei das Anodenmaterial einen Gehalt an Eisen von größer gleich 0,02 mg/kg aufweist.

2. Anodenmaterial nach Anspruch 1, **dadurch gekennzeichnet, dass** im Anodenmaterial
i) die Siliziumpartikel einen Gehalt an Eisen von größer gleich 0,02 mg/kg, bevorzugt größer gleich 0,05 mg/kg, und/oder
ii) Eisen enthaltende Partikel mit einem Gehalt an Eisen von größer gleich 90 Gew.-% in Bezug auf die Eisen enthaltenden Partikel mit einem Gehalt von 100 Gew.-% enthalten sind, wobei die Eisen enthaltenden Partikel vorzugsweise eine Edelstahllegierung umfassen.

3. Anodenmaterial nach Anspruch 1 oder 2, **dadurch gekennzeichnet, dass** das Anodenmaterial einen Gehalt aufweist an
- Eisen größer gleich 0,05 mg/kg,
- Aluminium größer gleich 0,01 mg/kg,
- Kohlenstoff größer gleich 0,01 mg/kg,
- Calcium größer gleich 0,01 mg/kg,
- und optional Titan größer gleich 0,001 mg/kg,
- und optional Kupfer größer gleich 0,001 mg/kg.

4. Anodenmaterial nach einem der Ansprüche 1 bis 3, **dadurch gekennzeichnet, dass** Anodenmaterial einen Gehalt aufweist an
- Eisen größer gleich 5 mg/kg,
- Aluminium größer gleich 0,5 mg/kg,
- Calcium größer gleich 5 mg/kg,
- und optional Titan größer gleich 0,01 mg/kg,
- sowie optional Sauerstoff größer gleich 0,01 mg/kg,
- und optional Kupfer größer gleich 0,05 mg/kg.

5. Anodenmaterial nach einem der Ansprüche 1 bis 4, **dadurch gekennzeichnet, dass** das Anodenmaterial einen Gehalt an Eisen größer gleich 50 mg/kg in Bezug auf die Gesamtzusammensetzung ausgewählt aus Siliziumpartikeln, Kohlenstoff und Silizium enthaltenden Partikeln und optional Partikeln mindestens einer allotropen Kohlenstoffmodifikation, Eisen enthaltenden Partikeln, insbesondere Partikeln von Edelstahl, und optional Siliziumdioxid, aufweist.

6. Anodenmaterial nach einem der Ansprüche 1 bis 5, **dadurch gekennzeichnet, dass** das Anodenmaterial in Bezug auf die Gesamtzusammensetzung ausgewählt aus Siliziumpartikeln, Kohlenstoff und Silizium enthaltende Partikeln und optional Partikeln mindestens einer allotropen Kohlenstoffmodifikation einen Gehalt an Silizium von 60 bis 90 Gew.-% aufweist.

7. Anodenmaterial nach einem der Ansprüche 1 bis 6, **dadurch gekennzeichnet, dass** das Anodenmaterial umfasst Siliziumpartikel einer Partikelgröße im Bereich von 0,1 µm bis 10 µm, sowie Siliciumcarbid, und optional Partikel einer allotropen Kohlenstoffmodifikation ausgewählt aus Diamant, Graphit, Fulleren, Graphen.

8. Anodenmaterial nach einem der Ansprüche 1 bis 7, **dadurch gekennzeichnet, dass** das Anodenmaterial umfasst eine fluide Matrix umfassend mindestens einen Polyether, insbesondere Polyalkylenoxid oder ein Gemisch von Polyalkylenoxiden, wobei das Alkylen ausgewählt ist aus bivalenten Alkylenen umfassend 1 bis 6 C-Atome, und vorzugsweise ist das Alkylen ausgewählt aus Methylen, Ethylen, n-Propylen, iso-Propylen und Butylen.

9. Anodenmaterial nach einem der Ansprüche 1 bis 7, **dadurch gekennzeichnet, dass**
das Anodenmaterial umfasst i) partikuläre Feststoffe und ii) eine fluide Matrix,
wobei die i) partikularen Feststoffe umfassten
35 bis 55 Gew.-% Silizium,
5 bis 15 Gew.-% Siliziumdioxid,
35 bis 55 Gew.-% Siliziumcarbid,
3 bis 8,5 Gew.-% Eisen, wobei die Gesamtzusammensetzung der partikulären Feststoffe des Anodenmaterials 100 Gew.-% beträgt, und
die ii) fluide Matrix umfasst mindestens ein Polyalkylenoxid, oder ein Gemisch von Polyalkylenoxiden, wobei die Alkylene ausgewählt sind aus bivalenten Alkylenen, die 1 bis 6 C-Atome umfassen, und die bivalenten Alkylene vorzugsweise ausgewählt sind aus Methylen, Ethylen, n-Propylen, iso-Propylen und Butylen.

10. Anodenmaterial nach einem der Ansprüche 8 oder 9, **dadurch gekennzeichnet, dass** das Polyalkylenoxid ausgewählt ist aus HO(C₂H₄O)ₙH mit n größer gleich 4, R¹O(C₂H₄O)ₙ₁R² mit R¹ und R² jeweils unabhängig ausgewählt aus -H, -Alkyl, -C=O-Alkyl mit Alkyl jeweils unabhängig mit 1 bis 6 C-Atomen, wobei R¹ oder R² nicht gleich H sind, mit n1 = größer gleich 4, HO(C₃H₆O)ₘH mit m größer gleich 4, R³O(C₃H₆O)ₘ₁R⁴ mit R³ und R⁴ jeweils unabhängig ausgewählt aus H, Alkyl, -C=O-Alkyl, mit Alkyl jeweils unabhängig mit 1 bis 6 C-Atomen, mit m1 größer gleich 4, wobei R³ oder R⁴ nicht gleich H sind, Polyether der vorgenannten Polyalkylenoxide umfassend Ethylenoxid und Propylenoxid-Einheiten und Gemischen von Polyalkylenoxiden umfassend mindestens zwei unterschiedliche Polyalkylenoxide.

11. Kit umfassend eine Anode **dadurch gekennzeichnet, dass** die Anode einen Anodenraum aufweist und der Anodenraum einen oder mehrere Kontakte für einen Elektronentransport aufweist sowie eine oder mehrere für den Elektrolyt durchlässige Separatoren umfassend eine Membran, Filter, Folie mit definierten Durchlässen, Netz, poröse Keramik, wobei der Anodenraum eine Einlassöffnung oder mehrere Einlassöffnungen für die Zufuhr von Anodenmaterial nach einem der Ansprüche 1 bis 10 und eine Auslassöffnung oder mehrere Auslassöffnungen aufweist, die vorzugsweise an gegenüberliegenden Positionen des Anodenraums angeordnet sind, und der Anodenraum mit Anodenmaterial nach einem der Ansprüche 1 bis 10 befüllbar ist oder das Anodenmaterial nach einem der Ansprüche 1 bis 10 aufweist, wobei das Anodenmaterial teilweise bis vollständig kontinuierlich oder diskontinuierlich über die Einlassöffnung(en) und Auslassöffnung(en) austauschbar ist.

12. Elektronenliefernder Kraftstoff umfassend ein Anodenmaterial nach einem der Ansprüche 1 bis 10 zur Verwendung als Elektronenquelle in einer Anode einer Primärzelle.

13. Kraftstoff nach Anspruch 12, **dadurch gekennzeichnet, dass** die Primärzelle einen Elektrolyten aufweist, der umfasst wässrige Hydroxid-Anionen, Carbonat-Anionen oder Halogenid-Anionen, insbesondere ist der Elektrolyt eine Fluorid-Anionen und/oder Chlorid-Anionen enthaltende Zusammensetzung.

14. Elektrochemische Primärzelle aufweisend eine Anode, eine Kathode, einen Elektrolyten sowie mindestens einen Separator, wobei der Separator die Kathode und die Anode voneinander separiert, und die Kathode ist eine Luftkathode mit Silber als Katalysator oder umfasst als Material Mangandioxid und optional einen Kohlenstoff enthaltenden Leitfähigkeitsvermittler, **dadurch gekennzeichnet, dass**
die Anode ein Anodenmaterial nach einem der Ansprüche 1 bis 10 und optional einen Kohlenstoff enthaltenden Leitfähigkeitsvermittler umfasst.

15. Verwendung eines Anodenmaterials nach einem der Ansprüche 1 bis 10 als Elektronen liefernder Kraftstoff in einer Primärzelle, insbesondere wobei die Verwendung des Anodenmaterials in einem wässrig-organischen-alkalischen Elektrolyten erfolgt.
